# EUROPÄISCHE PATENTSCHRIFT

(11) **EP 4 182 102 B1**
(45) Veröffentlichungstag und Bekanntmachung des Hinweises auf die Patenterteilung: **30.10.2024**
(21) Anmeldenummer: 21749535.7
(22) Anmeldetag: 12.07.2021
(51) Int. Cl.: B21C 51/00

(54) **VERFAHREN ZUM MARKIEREN EINES STAHLBANDES UND STAHLBAND MIT EINER MEHRZAHL VON MARKERN**
METHOD FOR MARKING A STEEL STRIP, AND STEEL STRIP WITH A PLURALITY OF MARKERS
PROCÉDÉ DE MARQUAGE D'UNE BANDE D'ACIER ET BANDE D'ACIER POURVUE D'UNE PLURALITÉ DE MARQUEURS

(30) Priorität: 15.07.2020 DE 102020208818
(43) Veröffentlichungstag der Anmeldung: 24.05.2023
(73) Patentinhaber: ThyssenKrupp Steel Europe AG, 47166 Duisburg (DE)
(72) Erfinder: WEBER, Wolfram, 46537 Dinslaken (DE); PATBERG, Lothar, 47445 Moers (DE); OVERLÖPER, Daniel, 47051 Duisburg (DE); GRÜNENDICK, Thorsten, 45472 Mülheim a. d. Ruhr (DE)
(74) Vertreter: ThyssenKrupp Steel Europe AG
(86) Internationale Anmeldenummer: PCT/EP2021/069372
(87) Internationale Veröffentlichungsnummer: WO 2022/013169

(56) Entgegenhaltungen:
- DE-A1- 102018 222 180
- DE-A1- 3 023 070
- JP-A- 2002 192 230
- JP-A- 2014 076 480
- KR-A- 20100 107 596

## Beschreibung

Die Erfindung betrifft ein Verfahren zum Markieren eines Stahlbandes, ein entsprechend markiertes Stahlband, ein Set aus Stahlband und Datencontainer sowie ein Verfahren zum Verarbeiten von Stahlband bzw. Set aus Stahlband und Datencontainer.

Unter einem Stahlband wird im Sinne dieser Anmeldung ein flaches Stahlprodukt verstanden mit einer Längsseite und einer Querseite. Hierunter fallen insbesondere aufhaspelbare Walzprodukte mit Dicken im Bereich 1mm bis 4mm aber auch Bleche mit einer Dicke von 3mm bis 15mm.

Ein Stahlband wird häufig mit einem Marker zu versehen, um das Stahlband im Verlauf der Weiterverarbeitung identifizieren zu können. Dabei wird im Regelfall die flache Bandoberfläche für die Anbringung des Markers verwendet.

Beispielsweise offenbart die JP2014076480 die Anbringung von Barcodes auf der flachen Bandoberfläche in der Nähe von Defekten, wobei die Barcodes Informationen über die Defekte enthalten (z.B. Art des Defektes, Größe, Position).

Aufgabe der vorliegenden Erfindung ist es, die bekannten Markierverfahren weiterzuentwickeln.

Gelöst wird diese Aufgabe durch ein Verfahren zum Markieren eines Stahlbandes mit Werkstoffeigenschaften des Stahlbandes umfassend folgende Schritte:
- Messung von Werkstoffeigenschaften des Stahlbandes an einer Mehrzahl von diskreten Bandpositionen
- Anbringen einer Mehrzahl von Markern auf der Bandkante an den diskreten Bandpositionen, wobei jeder Marker aus der Mehrzahl von Markern eine Werkstoff-Kennung bezüglich der gemessenen Werkstoffeigenschaften an der jeweiligen Bandposition des Markers enthält.

Da die Werkstoffeigenschaft bevorzugt eine lokale Werkstoffeigenschaft ist, die entlang des Stahlbandes variiert, ergeben sich unterschiedliche Messwerte an den diskreten Bandpositionen. Folglich enthält jeder Marker aus der Mehrzahl von Markern eine Werkstoff-Kennung bezüglich der unterschiedlichen, gemessenen Werkstoffeigenschaften an seiner jeweiligen Bandposition.

Die Aufgabe wird ebenfalls gelöst durch ein Stahlbandset und ein Stahlband mit Markierungen sowie Verfahren zum Verarbeiten des Stahlbandsets bzw. Verfahren zum Verarbeiten des Stahlbandes, die später näher beschrieben werden. Viele Vorteile der Erfindung werden im Folgenden lediglich in Bezug auf das Markierverfahren erläutert. Die entsprechenden Vorteile gelten ebenso für das Stahlbandset, das Stahlband mit Markierungen sowie die Verfahren zum Verarbeiten des Stahlbandsets bzw. die Verfahren zum Verarbeiten des Stahlbandes.

Unter einer diskreten Bandposition wird eine Position entlang der Längsseite des Stahlbandes verstanden. Eine Werkstoffeigenschaft, die an einer diskreten Bandposition vorliegt, bezieht sich auf Werkstoffeigenschaften eines Abschnittes des Stahlbandes an dieser Position entlang der Längsseite. Das bedeutet, die Werkstoffeigenschaft wird auf einen Streifen senkrecht zur Längsseite des Stahlbandes an dieser Position entlang der Längsseite gemessen. Die Messung erfolgt insbesondere mit einer Messeinrichtung.

Das Anbringen einer Mehrzahl von Markern an der Bandkante erfolgt insbesondere dadurch, dass das Stahlband entlang seiner Längsrichtung an einer Markiereinheit vorbeibewegt wird, wobei die Markiereinheit benachbart zur Bandkante angeordnet ist. Hierdurch lassen sich effizient eine große Anzahl von Markern an der Bandkante anbringen. Das Anbringen erfolgt insbesondere mit einer Markiereinrichtung.

Das weiterentwickelte Verfahren hat verschieden Vorteile. Die Anbringung einer Mehrzahl von Markern führt dazu, dass sichergestellt ist, dass auch bei einer Teilung des Stahlbandes in kleinere Einheiten ein Marker auf den Teilstücken verbleibt. Somit ist eine Neumarkierung der Teilstücke nach der Teilung nicht erforderlich.

Zudem enthalten die Marker jeweils eine Werkstoff-Kennung bezüglich der Werkstoffeigenschaften an der jeweiligen Bandposition des Markers. Es ist also möglich, bereits bei der Produktion ortsaufgelöste Werkstoffeigenschaften des Stahlbandes zu vermessen und die gemessenen Werkstoffeigenschaften über die Werkstoff-Kennung mit dem Stahlband zu verknüpfen. Diese Information kann auch bei einer Teilung des Stahlbandes in kleinere Einheiten nicht verloren gehen, da der Marker mit der Werkstoff-Kennung bezüglich der Werkstoffeigenschaften an genau der diskreten Bandposition angebracht wird, an der auch die Messung der Werkstoffeigenschaften erfolgt. Ohne die Referenzierung über die Mehrzahl von Markern wäre eine komplexe Materialverfolgung erforderlich, um bei einer späteren Weiterverarbeitung eines Bandteilstückes die Werkstoffeigenschaften dieses Bandteilstückes aus den ursprünglichen Messdaten des Gesamtbandes zu extrahieren. Durch die direkte Anbringung der Marker an den Bandpositionen, an denen die Messung vorgenommen wurde, kann sicher verhindert werden, dass es zu Verwechslungen von Bandteilstücken und damit zu Fehlzuordnungen zwischen Bandteilstücken und Messdaten kommt.

Die Anbringung an der Bandkante hat den zusätzlichen Vorteil, dass hierdurch keine Nutzfläche des Stahlbandes verloren geht. Die häufig vorgenommene Anbringung auf der planen Bandoberfläche kann zu einer Beeinträchtigung der Bandoberfläche, beispielsweise einer Beschädigung der Beschichtung, führen. In einem solchen Fall wird der Teil des Stahlbandes, an dem der Marker angebracht ist, bei der Weiterverarbeitung nicht verwendet. Somit kommt es zu einem gewissen Verschnitt. Dieser Verschnitt kann durch die Anbringung an der Bandkante reduziert werden. Auch wenn die Oberflächenbeschädigung nur gering ist, kann es zu einer Beeinträchtigung des Lackbildes kommen. Selbst wenn keine Beschädigung der Bandoberfläche durch den Marker entsteht, ist es erforderlich, den Marker vor der Endverarbeitung zu entfernen, um den Teil des Stahlbandes, an dem der Marker angebracht ist, verwenden zu können. Dieser zusätzliche Verfahrensschritt, der in der Ablösung des Markers besteht, kann durch die Anbringung an der Bandkante eingespart werden, da der Marker im Regelfall einfach hier verbleiben kann.

Bei den gemessenen Werkstoffeigenschaften, die entlang des Stahlbandes variieren, kann es sich insbesondere um eine oder mehrere der folgenden Größen handeln:
- lokale Dicke des Stahlbandes
- lokale Breite des Stahlbandes
- lokale mechanisch-technologische Eigenschaften
- lokale Rauheit
- lokale verdeckte oder offene Werkstofffehler
- lokale Beschichtungsdicke
- lokale Beölung

Grundsätzlicher Vorteil des erfindungsgemäßen Anbringens einer Mehrzahl von Markern auf der Bandkante mit lokal zugeordneten Werkstoffeigenschaften ist, dass die Prozessparameter bei der Werkstoffweiterverarbeitung dynamisch angepasst werden können. Diese Prozessparameter beispielsweise bestimmende Parameter bei der Umformung oder dem Teilen des Werkstoffes mit bestimmter- und unbestimmter Schneidengeometrie sein. Unter bestimmter Schneidengeometrie werden beispielsweise Messer und Stanzen verstanden, während unter unbestimmter Schneidengeometrie beispielsweise Schleifverfahren, Laserstrahlschneiden und Wasserstrahlschneiden verstanden werden.

Für den Fall die gemessenen Werkstoffeigenschaften die lokale Dicke des Stahlbandes umfasst, können die folgenden Prozessparameter bei der Weiterverarbeitung dynamisch angepasst werden:

| | |
|---|---|
| Bei der Umformung: | Umformkräfte, Umformwege, Spalteinstellungen |
| Bei einer bestimmten Schneidengeometrie: | Schnittkräfte, Spalteinstellungen |
| Bei einer unbestimmten Schneidengeometrie: | Laserleistungen, Druckverhältnisse, Lage von Fokuspunkten, Schneidgeschwindigkeiten |

Für den Fall die gemessenen Werkstoffeigenschaften die lokale Breite des Stahlbandes umfasst, können die folgenden Prozessparameter bei der Weiterverarbeitung dynamisch angepasst werden:

| | |
|---|---|
| Bei der Umformung: | Umformkräfte, Umformwege, Spalteinstellungen |
| Bei einer bestimmten Schneidengeometrie: | Anpassen von Schnittpositionen und Schnittlängen |
| Bei einer unbestimmten Schneidengeometrie: | Anpassen von Schnittpositionen und Schnittlängen |

Für den Fall die gemessenen Werkstoffeigenschaften lokale mechanisch-technologische Eigenschaften oder die lokale Rauheit des Stahlbandes umfasst, können die folgenden Prozessparameter bei der Weiterverarbeitung dynamisch angepasst werden:

| | |
|---|---|
| Bei der Umformung: | Umformkräfte, Umformwege, Spalteinstellungen |
| Bei einer bestimmten Schneidengeometrie: | Schnittkräfte, Spalteinstellungen |

Für den Fall die gemessenen Werkstoffeigenschaften lokale verdeckte oder offene Werkstofffehler oder die lokale Beschichtungsdicke umfasst, können die Informationen verwendet werden, um Ausschuss oder das Ausliefern schadhafter Teile zu vermeiden. Entsprechende Abschnitte des Stahlbandes können gänzlich aussortiert werden oder für Bauteile mit weniger hohen Anforderungen verwendet werden.

Für den Fall die gemessenen Werkstoffeigenschaften die lokale Beölung des Stahlbandes umfasst, können die folgenden Prozessparameter bei der Weiterverarbeitung dynamisch angepasst werden:

| | |
|---|---|
| Bei der Umformung: | Umformkräfte, Umformwege, Spalteinstellungen |
| Bei einer bestimmten Schneidengeometrie: | Schnittkräfte, Spalteinstellungen |
| Generell: | Erfordernis und Stärke einer Nachbeölung |

Bei einer weitergebildeten Ausführungsvariante des Verfahren umfasst das Verfahren die folgenden Schritte:
- Zuordnen von den gemessenen Werkstoffeigenschaften an den jeweiligen Bandpositionen und optional den diskreten Bandpositionen zu Datensätzen mit eindeutigen Datensatz-Kennungen
- Ablegen aller Datensätze eines Stahlbandes in einem, dem Stahlband zugehörigen, Datencontainer

Bei dieser Variante der Erfindung werden die gemessenen Werkstoffeigenschaften in einem Datencontainer abgelegt. Dies ermöglicht die Aufnahme und sichere Abspeicherung von größeren Informationsgehalten im Vergleich zur später erläuterten Alternative, die gemessenen Werkstoffeigenschaften direkt auf dem Stahlband anzubringen. Bei der hier erläuterten Alternative werden allen Werkstoffeigenschaften, die an einer diskreten Bandposition gemessen wurden, zu einem Datensatz zusammengestellt (z.B. die Werte Breite, Dicke und Rauheit). Dieser Datensatz kann zusätzlich auch die Bandposition enthalten (z.B. gemessen in Millimetern von einer der Querseiten). Für die weitere Verarbeitung enthält der Datensatz eine eindeutige Datensatz-Kennung und wird in einem Datencontainer des Stahlbandes abgelegt. Die Datensatz-Kennung dient dazu die gemessenen Werkstoffeigenschaften der Messposition zuordnen zu können. Bei der Datensatz-Kennung kann es sich beispielsweise um die Bandposition der Messung selbst handeln. Alternativ kann die Datensatz-Kennung auch in einer laufenden Nummer bestehen, mit der der Datensatz eindeutig identifiziert werden kann. Die Datensatz-Kennung kann auch im Speicherort des Datensatzes bestehen. Beispielsweise können die Datensätze sukzessive in den Datencontainer geschrieben werden, so dass die Position (z.B. die Zeile oder Spalte) in dem Datencontainer die Datensatz-Kennung bildet.

Der Datencontainer kann beispielsweise als eine Diagnosedatei ausgeführt sein, in der Daten zu dem Stahlband gespeichert werden. Alternativ kann der Datencontainer auch als ein Datenbankobjekt in einer Materialdatenbank ausgeführt sein. Die Materialdatenbank enthält dann beispielsweise für viele Stahlbänder jeweils ein Datenbankobjekt, in dem jeweils die Daten für ein Stahlband gespeichert sind.

Bei einer Weiterbildung des Verfahrens ist die Werkstoff-Kennung als eine eindeutige Werkstoff-Kennung ausgeführt, wobei jede Werkstoff-Kennung einer eindeutigen Datensatz-Kennung zugeordnet ist, so dass sich eine eindeutige Zuordnung von jedem Marker zu einem Datensatz ergibt, wobei jeder Marker zu dem Datensatz zugeordnet ist, der die Werkstoffeigenschaften seiner Bandposition enthält. Die Werkstoff-Kennung bezüglich der gemessenen Werkstoffeigenschaften ist also als ein Verweis auf den zugeordneten Datensatz mit der eindeutigen Datensatz-Kennung ausgeführt. Ein typisches Beispiel für einen solchen Verweis aus einem anderen Zusammenhang ist ein QR-Code, der auf eine Internetseite verweist. In dem Fall enthält der QR-Code die Internetadresse der zugeordneten Internetseite. Analog enthält im vorliegenden Fall die Werkstoff-Kennung die Information, welcher Datensatz zu diesem Marker zugeordnet ist.

In einer weitergebildeten Variante des Verfahrens umfasst das Verfahren die folgenden Schritte:
- Zusammenstellen eines Satzes von Produktionsparametern des Stahlbandes
- Ablegen der Produktionsparameter in dem, dem Stahlband zugehörigen, Datencontainer Diese Weiterbildung hat den Vorteil, dass noch weitere Informationen, nämlich die Produktionsparameter, in dem Datencontainer zum Stahlband abgelegt sind. Bei diesen Produktionsparametern handelt es sich insbesondere um die Schmelzenzusammensetzung der verwendeten Stahlschmelze, die Walzbedingungen, die Einzelheiten der Wärmebehandlung, die Details der Oberflächenbearbeitung (z.B. Dessierschritte), Beschichtungsparameter im Falle eines beschichteten Stahlbandes usw. Diese zusätzlichen Informationen erlauben es den Weiterverarbeitungsprozess gezielter in Abhängigkeit der Parameter zu steuern. Weiterhin kann bei später auftretenden Materialfehlern besser zurückverfolgt werden, welcher Produktionsschritt möglicherweise für den Fehler verantwortlich ist.

Alternativ oder ergänzend kann das Verfahren derart weitergebildet sein, dass es die folgenden Schritte umfasst:
- Erstellen einer eindeutigen Stahlband-Kennung
- Ablegen der eindeutigen Stahlband-Kennung in dem, dem Stahlband zugehörigen, Datencontainer

Zu jedem Stahlband, beispielsweise zu jedem Coil, wird eine eindeutige Stahlband-Kennung, beispielsweise eine eindeutige Identifikationsnummer, erstellt. Diese wird zusätzlich in dem, dem Stahlband zugehörigen, Datencontainer abgelegt. Hierdurch lässt sich auch noch später bei der Weiterverarbeitung eindeutig zurückverfolgen, zu welcher Schmelze der entsprechende Stahlabschnitt gehört und welche Produktionsschritte das Stahlband durchlaufen hat.

Alternativ oder ergänzend zu der erläuterten Verwendung eines Datencontainers kann das Verfahren auch dahingehend weitergebildet sein, dass die Werkstoff-Kennung jedes Markers aus der Mehrzahl von Markern als mindestens eine Werkstoffeigenschaft an seiner Bandposition in codierter oder uncodierter Form ausgeführt ist. Dies hat den Vorteil, dass die Werkstoffeigenschaft unmittelbar am Marker ausgelesen werden kann, ohne dass der Zugriff auf einen Datencontainer erforderlich ist. Dies vereinfacht beispielsweise die Logistik, da beim Verkauf des Stahlbandes lediglich das Stahlband selbst und keine Datencontainer übermittelt werden müssen. Weiterhin senkt dies die Anforderungen an die IT-Infrastruktur, wenn kein Zugriff auf einen Datencontainer erforderlich ist. Zudem wird damit gleichzeitig die Prozessstabilität erhöht, da ein Ausfall der Zugriffsmöglichkeiten auf den Datencontainer (z.B. ein Ausfall des Servers mit der Datenbank der Datencontainer) nicht zu einem Stopp der Weiterverarbeitung führen muss.

Unter codierte Form wird im Sinne dieser Anmeldung eine Abkürzung der Messwerte (z.B. Verzicht auf die Angabe von Einheiten, Zehnerpotenzen und Messverfahren) aber auch eine Verschlüsselung der Zahlenwerte verstanden.

Insbesondere kann auch jeder Marker aus der Mehrzahl von Marken eine erste Werkstoff-Kennung und eine zweite Werkstoffkennung umfassen. Hierbei ist die erste Werkstoffkennung entsprechend der genannten ersten Variante als eine eindeutige Werkstoff-Kennung ausgeführt, wobei jede erste Werkstoff-Kennung einer eindeutigen Datensatz-Kennung zugeordnet ist. Dagegen ist die zweite Werkstoff-Kennung gemäß der zweiten beschriebenen Variante als mindestens eine Werkstoffeigenschaft an der Bandposition in codierter oder uncodierter Form ausgeführt.

Zusätzlich kann das Verfahren derart weitergebildet sein, dass es die folgenden Schritte umfasst:
- Zusammenstellen eines Satzes von Produktionsparametern des Stahlbandes
   und/oder
- Erstellen einer eindeutigen Stahlband-Kennung
wobei jeder Marker aus der Mehrzahl von Markern den Satz von Produktionsparametern und/oder die Stahlband-Kennung in codierter oder uncodierter Form enthält.

Zusätzlich zur Werkstoffeigenschaft umfasst jeder Marker also einen Satz von Produktionsparametern und/oder die Stahlband-Kennung in codierter oder uncodierter Form. Somit ist gewährleistet, dass auch diese Informationen auf schnelle einfache Weise zur Verfügung stehen, selbst wenn das Stahlband in kleinere Einheiten aufgeteilt wurde und man nur ein kleineres Teilstück des Stahlbandes vorliegen hat.

Weiterhin kann jeder Marker optional die Bandposition selbst in codierter oder uncodierter Form enthalten. Somit kann nach einer Teilung des Stahlbandes in kleinere Einheiten, die ursprüngliche Reihenfolge der kleineren Einheiten rekonstruiert werden.

Insbesondere ist das Verfahren derart weitergebildet, dass jeder Marker aus der Mehrzahl von Markern eine optische lesbare Kennzeichnung, insbesondere eine alphanumerische Zeichenkette, einen Strichcode und/oder einen QR-Code umfasst. Insbesondere ist die, im Marker enthaltene Werkstoff-Kennung als eine optische lesbare Kennzeichnung, insbesondere eine alphanumerische Zeichenkette, ein Strichcode und/oder ein QR-Code ausgeführt. Eine optisch lesbare Kennzeichnung hat den Vorteil, dass sie auf einfache Weise mit einer Lasermarkiereinheit angebracht werden kann und mit einer Kameratechnik wieder ausgelesen werden kann. Barcodes und QR-Codes sind schnell und einfach maschinenlesbar. Dagegen erlaubt eine alphanumerische Zeichenkette den Vorteil, dass sie auch ohne weiteres von menschlichen Bearbeitern abgelesen werden kann (z.B. bei einer Inventur eines Materiallagers).

Bei dem Einsatz von optischen Verfahren zum Auslesen von Markern mit einer optisch lesbaren Kennzeichnung, wie z.B. einem Barcode oder einem QR-Code liegen übliche Auslesegeschwindigkeiten zwischen 40 -140 kHz. Hieraus ergibt sich die geometrische Abmessung der Codierung in Abhängigkeit zu der Anordnung zwischen der Bandkante sowie dem optischen Strahlengang der Leseeinheit unter Beachtung der gewählten optischen Detektoren wie z. B. der Auflösung der eingesetzten Flächen- oder Zeilenkameras.

Bei einer Bewegung des Stahlband entlang seiner Längsrichtung an einer Leseeinheit vorbei mit einer Transportgeschwindigkeit von 20 m/min ist für die Verwendung einer Zeilenkamera für einen Barcode eine Einzelstrichbreite in Längsrichtung von ca. 300 µm realistisch. Um den Dateninhalt der Codierung abzubilden ergibt sich dabei eine gesamte Markierungslänge von ca. 50 mm. Bei einer Reduzierung der Transportgeschwindigkeit verringert sich ebenfalls eine erforderliche Einzelstrichbreite und somit die erforderliche Markierungslänge.

Bei einer Weiterbildung des Verfahrens umfasst jeder Marker aus der Mehrzahl von Markern eine lokale Gefüge-Veränderung des Stahlbandes und/oder ein lokal aufgeprägtes remanentes Magnetfeld. Insbesondere ist die, im Marker enthaltene Werkstoff-Kennung als eine lokale Gefüge-Veränderung des Stahlbandes und/oder ein lokal aufgeprägtes remanentes Magnetfeld ausgeführt. Eine lokale Gefüge-Veränderung kann durch eine Lasermarkiereinheit in das Gefüge des Stahlbandes geprägt werden und kann mit Wirbelstrom- oder Streuflusssensoren ausgelesen werden kann.

Die Verwendung von Gefügeveränderungen hat den Vorteil, dass diese nicht sichtbar optisch sichtbar sind und beispielsweise überlackiert werden können, ohne das Lackbild zu beeinträchtigen. Weiterhin sind sie permanent vorhanden und können noch ausgelesen werden auch wenn sie überlackiert worden sind. Sofern die Bandkante nicht bei der Weiterverarbeitung entfernt wurde, bleiben diese Informationen auch noch nach einer Umformung erhalten. Somit bleibt für die Lebensdauer des gefertigten Bauteiles die Information zur Verfügung ohne störend zu sein.

Ein lokal aufgeprägtes remanentes Magnetfeld kann mit einer magnetinduktiven Schreibeinheit auf die Bandkante angebracht werden und kann mit magnetfeldempfindlichen Sensoren wieder ausgelesen werden.

Die Verwendung von lokal aufgeprägten remanenten Magnetfeldern hat den Vorteil, dass diese nicht sichtbar optisch sichtbar sind und beispielsweise überlackiert werden können, ohne das Lackbild zu beeinträchtigen. Weiterhin sind sie permanent vorhanden und können noch ausgelesen werden auch wenn sie überlackiert worden sind. Sofern die Bandkante nicht bei der Weiterverarbeitung entfernt wurde, bleiben diese Informationen auch noch nach einer Umformung erhalten. Somit bleibt für die Lebensdauer des gefertigten Bauteiles die Information zur Verfügung ohne störend zu sein.

Bei dem Einsatz von Wirbelstrom- oder Streuflusssensoren als Leseeinheit wird die Abmessung der Marker durch die Mindestgröße bestimmt die ein Sensor aufweisen muss, um im technisch realisierbaren Abstand das Magnetfeld des Markers an der Bandkante zu erfassen. Übliche Ortsauflösungen liegen hierbei > 1,5 mm. Hieraus ergibt sich eine abgeschätzte Länge des Markers von ≥ 125 mm.

Bei einer speziellen Weiterbildung des Verfahrens ist der Abstand benachbarter Marker kleiner als 2m, insbesondere kleiner als 1m. Unter dem Abstand benachbarter Marker ist das Maximum der Abstände aller Marker zu ihren jeweilig benachbarten Markern zu verstehen. Hierdurch wird sichergestellt, dass auch bei den üblichen Teilungen in kleinere Einheiten mindestens ein Marker auf den Teilstücken verbleibt. Beispielsweise führt ein Maximalabstand von 2m zwischen jeweils benachbarten Markern dazu, dass auf einem Teilstück des Stahlbandes mit einer Länge von mehr als 2m mindestens ein Marker angeordnet ist. Die Abstände sind jeweils in Längsrichtung des Stahlbandes zu verstehen.

Typischerweise werden die Marker in regelmäßigen Abständen auf der Bandkante angebracht, wobei benachbarte Marker den gleichen Abstand zueinander haben und dieser Abstand die oben genannte Relation erfüllt.

Die Erfindung betrifft weiterhin ein Stahlbandset, umfassend ein Stahlband und einen, dem Stahlband zugehörige Datencontainer. Dabei umfasst der Datencontainer eine Mehrzahl von Datensätzen mit eindeutigen Datensatz-Kennungen, wobei jeder Datensatz Werkstoffeigenschaften des Stahlbandes an einer diskreten Bandposition und optional die diskrete Bandposition enthält. Zudem weist das Stahlband eine Mehrzahl von Markern auf der Bandkante an diskreten Bandpositionen auf, wobei jeder Marker aus der Mehrzahl von Markern eine eindeutige Werkstoff-Kennung umfasst, die einer eindeutige Datensatz-Kennung zugeordnet ist, so dass sich eine eindeutige Zuordnung von jedem Marker zu einem Datensatz ergibt, wobei jeder Marker zu dem Datensatz zugeordnet ist, der die Werkstoffeigenschaften seiner Bandposition enthält.

Beim Stahlbandset kann der Datencontainer also Diagnosedatei oder eine Materialdatenbank bzw. ein Datenbankobjekt in einer Materialdatenbank ausgeführt sein. Das Stahlbandset kann den Datencontainer physisch umfassen, beispielsweise, wenn zusammen mit dem Stahlband ein Datenträger mit dem Datencontainer ausgeliefert wird. Alternativ das Stahlbandset den Datencontainer auch in Form einer Zugangsberechtigung auf einen Internet-Speicher umfassen, beispielsweise, wenn bei Auslieferung mit dem Stahlband ein Link auf eine Online-Datenbank des Stahlherstellers zur Verfügung gestellt wird.

Ein solches Stahlbandset ermöglicht eine zügige Weiterverarbeitung des Stahlbandes, da auf einfache Weise die Werkstoffeigenschaften an einer Bandposition eines Markes aus dem Datencontainer ausgelesen werden können. Somit kann gezielt ein bestimmter Bandabschnitt beispielsweise ausgesondert werden, wenn beispielsweise Rauheitsanforderungen nicht erfüllt werden. Oder der Verarbeitungsprozess kann gezielt an die Dicke des Stahlbandes angepasst werden, die an Bandposition des entsprechenden Markers vorliegt.

Bei einer bevorzugten Weiterbildung umfasst der Datencontainer einen Satz von Produktionsparametern des Stahlbandes und/oder eine eindeutige Stahlband-Kennung. Diese zusätzlichen Informationen erlauben es den Weiterverarbeitungsprozess gezielter in Abhängigkeit der Parameter zu steuern. Weiterhin kann bei später auftretenden Materialfehlern besser zurückverfolgt werden, welcher Produktionsschritt möglicherweise für den Fehler verantwortlich ist.

In einer speziellen Ausgestaltung umfasst jeder Marker aus der Mehrzahl von Markern eine optische lesbare Kennzeichnung, insbesondere eine alphanumerische Zeichenkette, einen Strichcode und/oder einen QR-Code umfasst. Insbesondere ist die, im Marker enthaltene Werkstoff-Kennung als eine optische lesbare Kennzeichnung, insbesondere eine alphanumerische Zeichenkette, ein Strichcode und/oder ein QR-Code ausgeführt.

Alternativ umfasst jeder Marker aus der Mehrzahl von Markern eine lokale Gefüge-Veränderung des Stahlbandes und/oder ein lokal aufgeprägtes remanentes Magnetfeld. Insbesondere ist die, im Marker enthaltene Werkstoff-Kennung als eine lokale Gefüge-Veränderung des Stahlbandes und/oder ein lokal aufgeprägtes remanentes Magnetfeld ausgeführt.

Selbstverständlich kann der Marker gleichzeitig eine beschriebene optisch lesbare Kennzeichnung und eine lokale Gefüge-Veränderung oder ein lokal aufgeprägtes remanentes Magnetfeld. Dies erhöht die Redundanz, wenn die gleiche Information auf zwei oder drei verschiedene Arten abgelegt wird.

Insbesondere ist das Stahlbandset derart weitergebildet, dass der Abstand benachbarter Marker beim kleiner ist als 2m, insbesondere kleiner ist als 1m. Hierdurch wird sichergestellt, dass auch bei den üblichen Teilungen in kleinere Einheiten mindestens ein Marker auf den Teilstücken verbleibt.

Die erfindungsgemäße Aufgabe wird ebenfalls gelöst durch ein Stahlband mit einer Mehrzahl von Markern auf der Bandkante an diskreten Bandpositionen, wobei jeder Marker aus der Mehrzahl von Markern mindestens eine Werkstoffeigenschaft an seiner jeweiligen Bandposition in codierter oder uncodierter Form enthält. Dies hat den Vorteil, dass die Werkstoffeigenschaft unmittelbar am Marker ausgelesen werden kann, ohne dass der Zugriff auf einen Datencontainer erforderlich ist. Dies vereinfacht beispielsweise die Logistik, da beim Verkauf des Stahlbandes lediglich das Stahlband selbst und keine Datencontainer übermittelt werden.

Bei einer bevorzugten Variante umfasst jeder Marker aus der Mehrzahl von Markern einen Satz von Produktionsparametern und/oder eine eindeutige Stahlband-Kennung in codierter oder uncodierter Form. Diese Informationen haben die bereits erläuterten Vorteile.

Bei einer speziellen Variante des Stahlbandes umfasst jeder Marker aus der Mehrzahl von Markern eine optische lesbare Kennzeichnung, insbesondere eine alphanumerische Zeichenkette, einen Strichcode und/oder einen QR-Code. Alternativ oder ergänzend umfasst jeder Marker aus der Mehrzahl von Markern eine lokale Gefüge-Veränderung des Stahlbandes und/oder ein lokal aufgeprägtes remanentes Magnetfeld.

Auch bei dieser Ausführungsvariante der Erfindung ist es vorteilhaft, wenn der Abstand benachbarter Marker kleiner als 2m, insbesondere kleiner ist als 1m ist.

Die Erfindung betrifft weiterhin ein Verfahren zum Verarbeiten eines zuvor beschriebenen Stahlbandsets umfassend die folgenden Schritte:
- Ablesen mindestens eines Markers aus der Mehrzahl von Markern am Stahlband, wobei der Marker eine Werkstoff-Kennung aufweist
- Auslesen des, der abgelesenen Werkstoff-Kennung zugeordneten, Datensatzes mit Werkstoffeigenschaften an der Bandposition des abgelesenen Markers aus dem Datencontainer
- Steuern einer Verarbeitungseinheit in Abhängigkeit der ausgelesenen Werkstoffeigenschaften

Das Ablesen einer Mehrzahl von Markern an der Bandkante erfolgt insbesondere dadurch, dass das Stahlband entlang seiner Längsrichtung an einer Leseeinheit vorbeibewegt wird, wobei die Leseeinheit benachbart zur Bandkante angeordnet ist. Hierdurch lassen sich effizient eine große Anzahl von Markern an der Bandkante ablesen. Bei der Leseeinheit kann es sich um eine optische Kamera handeln (im Falle von optisch lesbaren Kennzeichnungen), um Wirbelstrom- oder Streuflusssensoren (im Falle von lokalen Gefügeveränderungen) oder um magnetfeldempfindlichen Sensoren (im Falle von aufgeprägten, remanenten Magnetfeldern).

Der Vorteil dieses Verarbeitungsverfahrens ist, dass während der Verarbeitung instantan auf die ausgelesenen Werkstoffeigenschaften reagiert werden kann. Beispielsweise können die Schneid- oder Umformkräfte der Verarbeitungseinheit an die mechanisch-technologischen Eigenschaften angepasst werden, die an der entsprechenden Bandposition vorliegen. Bei lokalen Werkstofffehlern in der Oberfläche (z.B. Rauheitswerte, die außerhalb der Spezifikation liegen) kann der entsprechend Abschnitt bei der Weiterverarbeitung ausgesondert werden.

Insbesondere ist das Verfahren derart weitergebildet, dass es die folgenden Schritte umfasst:
- Auslesen eines Satzes von Produktionsparametern des Stahlbandes und/oder der eindeutigen Stahlband-Kennung aus dem Datencontainer
- Steuern einer Verarbeitungseinheit in Abhängigkeit der ausgelesenen Produktionsparameter und/oder der ausgelesenen Stahlband-Kennung

Die Erfindung betrifft außerdem ein Verfahren zum Verarbeiten eines zuvor beschriebenen Stahlbandes mit einer Mehrzahl von Markern auf der Bandkante an diskreten Bandpositionen, wobei jeder Marker aus der Mehrzahl von Markern mindestens eine Werkstoffeigenschaft an seiner jeweiligen Bandposition in codierter oder uncodierter Form enthält. Dabei umfasst das Verfahren die folgenden Schritte:
- Auslesen der mindestens eine Werkstoffeigenschaft aus einem Marker aus der Mehrzahl von Markern
- Steuern einer Verarbeitungseinheit in Abhängigkeit der ausgelesenen Werkstoffeigenschaften

Bei diesem Verfahren kann die Steuerung der Verarbeitungseinheit unmittelbar basierend auf den ausgelesenen Informationen erfolgen, ohne dass der Zugriff auf einen Datencontainer erforderlich ist.

Dieses Verfahren ist insbesondere derart weitergebildet, dass es zusätzlich die folgenden Schritte umfasst:
- Auslesen eines Satzes von Produktionsparametern des Stahlbandes und/oder der eindeutigen Stahlband-Kennung aus einem Marker aus der Mehrzahl von Markern
- Steuern einer Verarbeitungseinheit in Abhängigkeit der ausgelesenen Produktionsparameter und/oder der ausgelesenen Stahlband-Kennung

Näher erläutert wird die Erfindung anhand der Figuren. Dabei zeigen:
- **Fig. 1a**: eine schematische Darstellung der Markierung eines Stahlbandes bei einer ersten Ausführungsform,
- **Fig. 1b**: eine vergrößerte schematische Darstellung eines Markers,
- **Fig. 1c**: eine schematische Darstellung der Verarbeitung eines Stahlbandes bei einer ersten Ausführungsform,
- **Fig. 2a**: eine schematische Darstellung der Markierung eines Stahlbandes bei einer zweiten Ausführungsform,
- **Fig. 2b**: eine schematische Darstellung eines Datencontainers,
- **Fig. 2c**: eine vergrößerte schematische Darstellung eines Markers und
- **Fig. 2d**: eine schematische Darstellung der Verarbeitung eines Stahlbandes bei einer zweiten Ausführungsform.

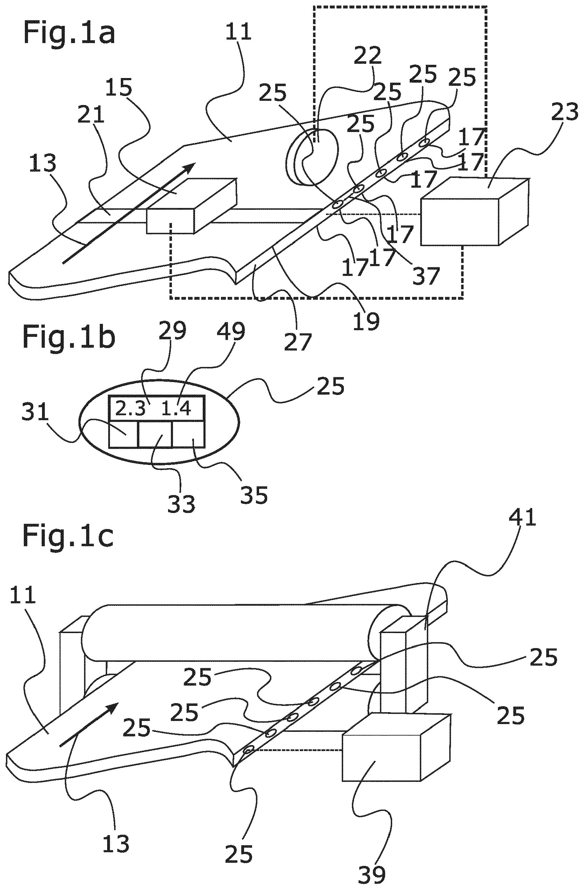

Figur 1a zeigt eine schematische Darstellung der Verarbeitung eines Stahlbandes in einer ersten Ausführungsform der Erfindung. Gezeigt ist ein Stahlband 11, das entlang seiner Längsrichtung 13 bewegt wird. Dabei bewegt sich das Stahlband 11 an einer Messeinrichtung 15 vorbei, mit der die lokalen Werkstoffeigenschaften des Stahlbandes 11 an einer Mehrzahl von diskreten Bandpositionen 17 gemessenen wird.

Unter einer diskreten Bandposition 17 wird eine Position entlang der Längsseite 19 des Stahlbandes verstanden. Eine Werkstoffeigenschaft, die an einer diskreten Bandposition vorliegt, bezieht sich auf Werkstoffeigenschaften eines Abschnittes des Stahlbandes an dieser Position entlang der Längsseite. Das bedeutet, die Werkstoffeigenschaft wird auf einen Streifen 21 senkrecht zur Längsseite 19 des Stahlbandes 11 an dieser Position entlang der Längsseite 19 gemessen. Dies bedeutet allerdings nicht, dass das der gesamte Streifen 21 vermessen werden muss. Bei der Werkstoffeigenschaft kann es sich beispielsweise auch um eine lokale Dicke in der Mitte des Stahlbandes 11 handeln. In einem solchen Fall wird selbstverständlich nur an einem Punkt des Streifens 21 gemessen.

Die diskreten Bandpositionen 17 werden bei der gezeigten Ausführungsform mit dem Positionsmessgerät 22 zusätzlich vermessen. Das Positionsmessgerät 22 ist optional, da die diskreten Bandpositionen 17 sich auch automatisch aufgrund der bekannten Geschwindigkeit der Bewegung des Stahlbandes 11 in Längsrichtung 13 berechnen lässt.

Mittels der Markiereinrichtung 23 wird eine Mehrzahl von Markern 25 auf der Bandkante 27 angebracht. Die Markiereinrichtung 25 ist in diesem Fall als eine Lasermarkiereinheit ausgeführt. Die Marker 25 haben in Längsrichtung 13 jeweils den gleichen Abstand 37 zueinander. Zur besseren Übersichtlichkeit ist der Abstand 37 lediglich für zwei benachbarte Marker 25 dargestellt.

In Figur 1b ist ein Marker 25 vergrößert dargestellt. Der Marker 25 umfasst eine Werkstoff-Kennung 29, die als mindestens eine Werkstoffeigenschaft 49 an seiner Bandposition in codierter Form ausgeführt ist. Beispielhaft ist die Werkstoff-Kennung als zwei Werkstoffeigenschaften 49 ausgeführt, nämlich der mittleren Stahlbanddicke von 2.3 mm und der mittleren Rauheit Rpm von 1.4 µm an dieser Bandposition. Zudem umfasst der Marker einen Satz von Produktionsparametern 31, eine Stahlband-Kennung 33 und die Bandposition 35 selbst. Zur besseren Übersichtlichkeit der Darstellung sind in Figur 1b nur die leeren Felder ohne Eintrag dargestellt. Der Satz von Produktionsparametern 31 und die Stahlband-Kennung 33 können vorab in einem Speicher der Markiereinheit 23 abgelegt werden, während die Werkstoff-Kennung 29 in Form der Werkstoffeigenschaften 49 online von der Messeinrichtung 15 übermittelt wird. Hierzu steht die Messeinrichtung 15 mit der Markiereinheit 23 in Signalverbindung (dargestellt durch die gestrichelten Verbindungslinien). Die Bandposition 35 entweder berechnet werden oder online vom Positionsmessgerät 22 übermittelt werden.

In Figur 1c ist die Verarbeitung eines Stahlbandes 11 gezeigt, das in vorbeschriebener Weise markiert wurde. Gezeigt ist ein Stahlband 11, das entlang seiner Längsrichtung 13 bewegt wird. Dabei bewegt sich das Stahlband 11 an einer Leseeinheit 39 vorbei, mit der die Werkstoffeigenschaften des Stahlbandes 11, die Produktionsparameter 31, die Stahlband-Kennung 33 und die Bandposition 35 aus dem Marker 25 ausgelesen werden. In Abhängigkeit dieser ausgelesenen Werte wird eine nachgeordnete Verarbeitungseinheit 41 gesteuert. Hierzu steht die Leseeinheit 39 in Signalverbindung mit der Verarbeitungseinheit 41 (dargestellt durch die gestrichelten Verbindungslinien). Die Verarbeitungseinheit 41 ist hier beispielhaft als eine Walzeinrichtung mit einer oberen und einer unteren Walze dargestellt.

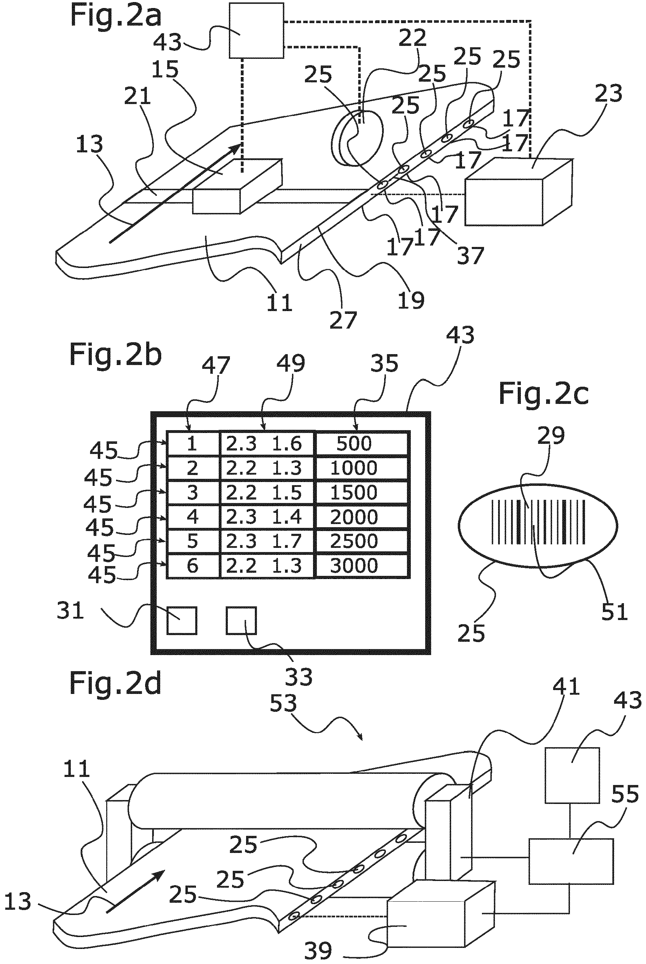

Figur 2a zeigt eine schematische Darstellung der Verarbeitung eines Stahlbandes in einer zweiten Ausführungsform der Erfindung. Gezeigt ist ein Stahlband 11, das entlang seiner Längsrichtung 13 bewegt wird. Dabei bewegt sich das Stahlband 11 an einer Messeinrichtung 15 vorbei, mit der die Werkstoffeigenschaften des Stahlbandes 11 an einer Mehrzahl von diskreten Bandpositionen 17 gemessenen wird.

Unter einer diskreten Bandposition 17 wird eine Position entlang der Längsseite 19 des Stahlbandes verstanden. Eine Werkstoffeigenschaft, die an einer diskreten Bandposition vorliegt, bezieht sich auf Werkstoffeigenschaften eines Abschnittes des Stahlbandes an dieser Position entlang der Längsseite. Das bedeutet, die Werkstoffeigenschaft wird auf einen Streifen 21 senkrecht zur Längsseite 19 des Stahlbandes 11 an dieser Position entlang der Längsseite 19 gemessen. Dies bedeutet allerdings nicht, dass das der gesamte Streifen 21 vermessen werden muss. Bei der Werkstoffeigenschaft kann es sich beispielsweise auch um eine lokale Dicke in der Mitte des Stahlbandes 11 handeln. In einem solchen Fall wird selbstverständlich nur an einem Punkt des Streifens 21 gemessen.

Die diskreten Bandpositionen 17 werden bei der gezeigten Ausführungsform mit dem Positionsmessgerät 22 zusätzlich vermessen. Das Positionsmessgerät 22 ist optional, da die diskreten Bandpositionen 17 sich auch automatisch aufgrund der bekannten Geschwindigkeit der Bewegung des Stahlbandes 11 in Längsrichtung 13 berechnen lässt.

Die gemessenen Werkstoffeigenschaften an den jeweiligen Bandpositionen und die diskreten Bandpositionen werden zu Datensätzen 45 zusammengeführt und es wird ihnen eine eindeutige Datensatz-Kennung 47 zugeordnet. Die Datensätze 45 werden in einem, dem Stahlband 11 zugehörigen, Datencontainer 43 zugeordnet.

Der Datencontainer 43 ist schematisch in Figur 2b dargestellt. Jede Zeile entspricht einem Datensatz 45. Die erste Spalte enthält die eindeutige Datensatz-Kennung 47, die zweite Spalte die Werkstoffeigenschaft 49 und die dritte Spalte die Bandposition 35. Der Übersichtlichkeit halber sind lediglich sechs Datensätze dargestellt. Die Datensatz-Kennung 47 ist als eine laufende Nummer ausgeführt (1, ..., 6). In der zweiten Spalte sind beispielhaft für die Werkstoffeigenschaft die Stahlbanddicke in mm und die mittleren Rauheit Rpm in µm angegeben. Die dritte Spalte gibt die Bandposition 35 in mm ab einem Referenzpunkt an. Die Bandpositionen 35 und damit auch die Marker 25 haben einen Abstand von 500mm untereinander.

Der Datencontainer 43 enthält weiterhin einen Satz von Produktionsparametern 31 und eine eindeutige Stahlband-Kennung 33. Diese beiden Angaben, die sich auf das Stahlband 11 als Ganzes beziehen, können dem Datencontainer 43 zu einem beliebigen Zeitpunkt hinzugefügt werden.

In Figur 2c ist ein Marker 25 vergrößert dargestellt. Der Marker 25 umfasst eine Werkstoff-Kennung 29, die als eine eindeutige Werkstoff-Kennung ausgeführt ist und genau einer eindeutigen Datensatz-Kennung 47 zugeordnet ist. Beispielhaft ist die Werkstoff-Kennung als ein Barcode 51 ausgeführt, der auf den entsprechenden Datensatz 45 mit der zugeordneten Datensatz-Kennung 47 verweist.

Die Mehrzahl von Markern 25 wurde mittels der Markiereinrichtung 23 auf der Bandkante 27 angebracht (siehe Figur 2a). Die Markiereinrichtung 25 ist in diesem Fall als eine Lasermarkiereinheit ausgeführt. Die Marker 25 haben in Längsrichtung 13 jeweils den gleichen Abstand 37 zueinander. Zur besseren Übersichtlichkeit ist der Abstand 37 lediglich für zwei benachbarte Marker 25 dargestellt.

In Figur 2d ist die Verarbeitung eines Stahlbandsets 53, umfassend ein Stahlband 11 und einen Datencontainer 43, gezeigt, das in vorbeschriebener Weise erzeugt wurde. Gezeigt ist ein Stahlband 11, das entlang seiner Längsrichtung 13 bewegt wird. Dabei bewegt sich das Stahlband 11 an einer Leseeinheit 39 vorbei, mit der die Werkstoff-Kennung 29 des Stahlbandes 11 aus dem Marker 25 ausgelesen wird. Die Werkstoff-Kennung 29 wird an eine Steuereinheit 55 übermittelt. Hierzu steht die Leseeinheit 39 mit der Steuereinheit 55 in Signalverbindung (dargestellt durch die gestrichtelten Linien). Die Steuereinheit 55 steht mit dem Datencontainer 43 in Signalverbindung und liest den, der abgelesenen Werkstoff-Kennung 29 zugeordneten, Datensatz 45 mit Werkstoffeigenschaften 49 an der Bandposition des abgelesenen Markers 25 aus dem Datencontainer 43 aus. Optional liest die Steuereinheit zudem die Produktionsparameter 31 und/oder die Stahlband-Kennung 33 aus dem Datencontainer 43 aus. In Abhängigkeit dieser ausgelesenen Werte wird eine nachgeordnete Verarbeitungseinheit 41 gesteuert. Hierzu steht die Steuereinheit 55 in Signalverbindung mit der Verarbeitungseinheit 41 (dargestellt durch die gestrichelten Verbindungslinien). Die Verarbeitungseinheit 41 ist hier beispielhaft als eine Walzeinrichtung mit einer oberen und einer unteren Walze dargestellt.

### Bezugszeichenliste

- 11: Stahlband
- 13: Längsrichtung
- 15: Messeinrichtung
- 17: Bandpositionen
- 19: Längsseite
- 21: Streifen
- 22: Positionsmessgerät
- 23: Markiereinheit
- 25: Marker
- 27: Bandkante
- 29: Werkstoff-Kennung
- 31: Satz von Produktionsparametern
- 33: Stahlband-Kennung
- 35: Bandposition (im Marker)
- 37: Abstand zweier benachbarter Marker
- 39: Leseeinheit
- 41: Verarbeitungseinheit
- 43: Datencontainer
- 45: Datensatz
- 47: Datensatz-Kennung
- 49: Werkstoffeigenschaft
- 51: Barcode
- 53: Stahlbandset
- 55: Steuereinheit

## Patentansprüche

1. Verfahren zum Markieren eines Stahlbandes (11) mit Werkstoffeigenschaften des Stahlbandes (11) umfassend folgende Schritte:
- Messung von Werkstoffeigenschaften des Stahlbandes (11) an einer Mehrzahl von diskreten Bandpositionen (17)
- Anbringen einer Mehrzahl von Markern (25) an den diskreten Bandpositionen (17), wobei jeder Marker (25) aus der Mehrzahl von Markern (25) eine Werkstoff-Kennung (29) bezüglich der gemessenen Werkstoffeigenschaften an der jeweiligen Bandposition (17) des Markers (25) enthält **dadurch gekennzeichnet, dass** das Anbringen der Mehrzahl von Markern (25) an den diskreten Bandpositionen (17) auf den Bandkante (27) erfolgt.

2. Verfahren nach Anspruch 1 umfassend die folgenden Schritte:
- Zuordnen von den gemessenen Werkstoffeigenschaften an den jeweiligen Bandpositionen (17) und optional den diskreten Bandpositionen (17) zu Datensätzen (45) mit eindeutigen Datensatz-Kennungen (47)
- Ablegen aller Datensätze (45) eines Stahlbandes (11) in einem, dem Stahlband (11) zugehörigen, Datencontainer (43)

3. Verfahren nach Anspruch 2, **dadurch gekennzeichnet, dass** die Werkstoff-Kennung (29) als eine eindeutige Werkstoff-Kennung (29) ausgeführt ist, wobei jede Werkstoff-Kennung (29) einer eindeutigen Datensatz-Kennung (47) zugeordnet ist, so dass sich eine eindeutige Zuordnung von jedem Marker (25) zu einem Datensatz (45) ergibt, wobei jeder Marker (25) zu dem Datensatz (45) zugeordnet ist, der die Werkstoffeigenschaften seiner Bandposition (17) enthält.

4. Verfahren nach einem der Ansprüche 2-3, umfassend die folgenden Schritte:
- Zusammenstellen eines Satzes von Produktionsparametern (31) des Stahlbandes (11)
- Ablegen der Produktionsparameter (31) in dem, dem Stahlband (11) zugehörigen, Datencontainer (43)

5. Verfahren nach einem der Ansprüche 2-4, umfassend die folgenden Schritte:
- Erstellen einer eindeutigen Stahlband-Kennung (33)
- Ablegen der eindeutigen Stahlband-Kennung (33) in dem, dem Stahlband (11) zugehörigen, Datencontainer (43)

6. Verfahren nach einem der Ansprüche 1-5, **dadurch gekennzeichnet, dass** die Werkstoff-Kennung (29) jedes Markers (25) aus der Mehrzahl von Markern (25) als mindestens eine Werkstoffeigenschaft an seiner Bandposition (17) in codierter oder uncodierter Form ausgeführt ist.

7. Verfahren nach Anspruch 6, umfassend die folgenden Schritte:
- Zusammenstellen eines Satzes von Produktionsparametern (31) des Stahlbandes (11) und/oder
- Erstellen einer eindeutigen Stahlband-Kennung (33)
wobei jeder Marker (25) aus der Mehrzahl von Markern (25) den Satz von Produktionsparametern und/oder die Stahlband-Kennung (33) in codierter oder uncodierter Form enthält.

8. Stahlbandset, umfassend ein Stahlband (11) und ein dem Stahlband (11) zugehöriger Datencontainer, wobei der Datencontainer (43) eine Mehrzahl von Datensätzen mit eindeutigen Datensatz-Kennungen (47) umfasst, wobei jeder Datensatz Werkstoffeigenschaften des Stahlbandes (11) an einer diskreten Bandposition (17) und optional die diskrete Bandposition (17) enthält und wobei das Stahlband (11) eine Mehrzahl von Markern (25) auf der Bandkante an diskreten Bandpositionen aufweist, wobei jeder Marker (25) aus der Mehrzahl von Markern (25) eine eindeutige Werkstoff-Kennung (29) umfasst, die einer eindeutigen Datensatz-Kennung (47) zugeordnet ist, so dass sich eine eindeutige Zuordnung von jedem Marker (25) zu einem Datensatz (45) ergibt, wobei jeder Marker (25) zu dem Datensatz (45) zugeordnet ist, der die Werkstoffeigenschaften seiner Bandposition (17) enthält.

9. Stahlbandset nach Anspruch 8, **dadurch gekennzeichnet, dass** die Datencontainer (43) einen Satz von Produktionsparametern des Stahlbandes (11) umfasst und/oder der Datencontainer (43) eine eindeutige Stahlband-Kennung (33) umfasst.

10. Stahlband (11) mit einer Mehrzahl von Markern (25) an diskreten Bandpositionen, wobei jeder Marker (25) aus der Mehrzahl von Markern (25) mindestens eine Werkstoffeigenschaft an seiner jeweiligen Bandposition (17) in codierter oder uncodierter Form enthält **dadurch gekennzeichnet, dass** die Mehrzahl von Markern (25) an diskreten Bandpositionen auf der Bandkante sind.

11. Stahlband (11) nach Anspruch 10, wobei jeder Marker (25) aus der Mehrzahl von Markern (25) einen Satz von Produktionsparametern und/oder eine eindeutige Stahlband-Kennung (33) in codierter oder uncodierter Form enthält.

12. Verfahren zum Verarbeiten eines Stahlbandsets gemäß einem der Ansprüche 8-9, umfassend die folgenden Schritte:
- Ablesen mindestens eines Markers (25) aus der Mehrzahl von Markern (25) am Stahlband, wobei der Marker (25) eine Werkstoff-Kennung (29) aufweist
- Auslesen des, der abgelesenen Werkstoff-Kennung (29) zugeordneten, Datensatzes mit Werkstoffeigenschaften an der Bandposition (17) des abgelesenen Markers aus dem Datencontainer
- Steuern einer Verarbeitungseinheit (41) in Abhängigkeit der ausgelesenen Werkstoffeigenschaften

13. Verfahren nach Anspruch 12, umfassend die folgenden Schritte:
- Auslesen eines Satzes von Produktionsparametern des Stahlbandes (11) und/oder der eindeutigen Stahlband-Kennung (33) aus der Datencontainer
- Steuern einer Verarbeitungseinheit (41) in Abhängigkeit der ausgelesenen Produktionsparameter und/oder der ausgelesenen Stahlband-Kennung

14. Verfahren zum Verarbeiten eines Stahlbandes (11) gemäß einem der Ansprüche 10-11, umfassend die folgenden Schritte:
- Auslesen der mindestens eine Werkstoffeigenschaft aus einem Marker (25) aus der Mehrzahl von Markern
- Steuern einer Verarbeitungseinheit (41) in Abhängigkeit der ausgelesenen Werkstoffeigenschaften

15. Verfahren nach Anspruch 14, umfassend die folgenden Schritte:
- Auslesen eines Satzes von Produktionsparametern des Stahlbandes (11) und/oder der eindeutigen Stahlband-Kennung (33) aus einem Marker (25) aus der Mehrzahl von Markern
- Steuern einer Verarbeitungseinheit (41) in Abhängigkeit der ausgelesenen Produktionsparameter und/oder der ausgelesenen Stahlband-Kennung (33)

## Claims

1. A method for marking a steel strip (11) with material properties of the steel strip (11), comprising the following steps:
- measuring material properties of the steel strip (11) at a plurality of discrete strip positions (17),
- applying a plurality of markers (25) at the discrete strip positions (17), each marker (25) from the plurality of markers (25) containing a material identifier (29) relating to the measured material properties at the respective strip position (17) of the marker (25), **characterized in that** a plurality of markers (25) are applied at the discrete strip positions (17) to the strip edge (27).

2. The method as claimed in claim 1, comprising the following steps:
- assigning the measured material properties at the respective strip positions (17) and optionally the discrete strip positions (17) to data sets (45) with unique data set identifiers (47),
- storing all data sets (45) of a steel strip (11) in a data container (43) associated with the steel strip (11).

3. The method as claimed in claim 2, **characterized in that** the material identifier (29) is designed as a unique material identifier (29), each material identifier (29) being assigned to a unique data set identifier (47) such that this results in a unique assignment of each marker (25) to a data set (45), with each marker (25) being assigned to the data set (45) which contains the material properties of its strip position (17).

4. The method as claimed in either of claims 2-3, comprising the following steps:
- compiling a set of production parameters (31) of the steel strip (11),
- storing the production parameters (31) in the data container (43) associated with the steel strip (11).

5. The method as claimed in either of claims 2-4, comprising the following steps:
- creating a unique steel strip identifier (33),
- storing the unique steel strip identifier (33) in the data container (43) associated with the steel strip (11).

6. The method as claimed in any one of claims 1-5, **characterized in that** the material identifier (29) of each marker (25) from the plurality of markers (25) is designed as at least one material property at its strip position (17) in coded or uncoded form.

7. The method as claimed in claim 6, comprising the following steps:
- compiling a set of production parameters (31) of the steel strip (11),
and/or
- creating a unique steel strip identifier (33),
with each marker (25) from the plurality of markers (25) containing the set of production parameters and/or the steel strip identifier (33) in coded or uncoded form.

8. A steel strip set, comprising a steel strip (11) and a data container associated with the steel strip (11), with the data container (43) comprising a plurality of data sets with unique data set identifiers (47), with each data set containing material properties of the steel strip (11) at a discrete strip position (17) and optionally the discrete strip position (17), and with the steel strip (11) having a plurality of markers (25) on the strip edge at discrete strip positions, each marker (25) from the plurality of markers (25) comprising a unique material identifier (29), which is assigned to a unique data set identifier (47) such that this results in a unique assignment of each marker (25) to a data set (45), with each marker (25) being assigned to the data set (45) which contains the material properties of its strip position (17).

9. The steel strip set as claimed in claim 8, **characterized in that** the data container (43) comprises a set of production parameters of the steel strip (11) and/or the data container (43) comprises a unique steel strip identifier (33).

10. A steel strip (11) with a plurality of markers (25) at discrete strip positions, each marker (25) from the plurality of markers (25) containing at least one material property at its respective strip position (17) in coded or uncoded form, **characterized in that** a plurality of markers (25) to the strip edge are at the discrete strip positions.

11. The steel strip (11) as claimed in claims 10, wherein each marker (25) from the plurality of markers (25) contains a set of production parameters and/or a unique steel strip identifier (33) in coded or uncoded form.

12. A method for processing a steel strip set as claimed in any one of claims 8-9, comprising the following steps:
- reading at least one marker (25) from the plurality of markers (25) on the steel strip, the marker (25) having a material identifier (29),
- reading out the data set assigned to the read material identifier (29) and containing material properties at the strip position (17) of the read marker from the data container,
- controlling a processing unit (41) on the basis of the read-out material properties.

13. The method as claimed in claim 12, comprising the following steps:
- reading out a set of production parameters of the steel strip (11) and/or the unique steel strip identifier (33) from the data container,
- controlling a processing unit (41) on the basis of the read-out production parameters and/or the read-out steel strip identifier.

14. A method for processing a steel strip (11) as claimed in any one of claims 10-11, comprising the following steps:
- reading out the at least one material property from a marker (25) from the plurality of markers,
- controlling a processing unit (41) on the basis of the read-out material properties.

15. The method as claimed in claim 14, comprising the following steps:
- reading out a set of production parameters of the steel strip (11) and/or the unique steel strip identifier (33) from a marker (25) from the plurality of markers,
- controlling a processing unit (41) on the basis of the read-out production parameters and/or the read-out steel strip identifier (33).

## Revendications

1. Procédé de marquage d'une bande d'acier (11) avec les propriétés du matériau de la bande d'acier (11), comprenant les étapes suivantes:
- mesurer les propriétés du matériau de la bande d'acier (11) à plusieurs positions distinctes de la bande (17),
- appliquer une pluralité de marqueurs (25), chaque marqueur (25) de la pluralité de marqueurs (25) contenant un identificateur de matériau (29) relatif aux propriétés du matériau mesurées à la position respective de la bande (17) du marqueur (25), **caractérisé en ce qu'**une pluralité de marqueurs (25) sont appliqués aux positions discrètes de la bande (17) sur le bord de la bande (27).

2. Procédé selon la revendication 1, comprenant les étapes suivantes :
- attribuer les propriétés des matériaux mesurées aux positions respectives des bandes (17) et éventuellement aux positions discrètes des bandes (17) à des ensembles de données (45) avec des identificateurs d'ensembles de données uniques (47),
- stocker tous les ensembles de données (45) d'une bande d'acier (11) dans un conteneur de données (43) associé à la bande d'acier (11).

3. Procédé selon la revendication 2, **caractérisé en ce que** l'identificateur de matériau (29) est conçu comme un identificateur de matériau unique (29), chaque identificateur de matériau (29) étant affecté à un identificateur d'ensemble de données unique (47) de sorte qu'il en résulte une affectation unique de chaque marqueur (25) à un ensemble de données (45), chaque marqueur (25) étant affecté à l'ensemble de données (45) qui contient les propriétés du matériau de sa position de bande (17).

4. Procédé selon l'une des revendications 2 et 3, comprenant les étapes suivantes :
- compilation d'un ensemble de paramètres de production (31) de la bande d'acier (11),
- stocker les paramètres de production (31) dans le conteneur de données (43) associé à la bande d'acier (11).

5. Procédé selon l'une des revendications 2 à 4, comprenant les étapes suivantes :
- en créant un identifiant unique de la bande d'acier (33),
- stocker l'identifiant unique de la bande d'acier (33) dans le conteneur de données (43) associé à la bande d'acier (11).

6. Procédé selon l'une des revendications 1 à 5, **caractérisée par le fait que** l'identificateur de matériau (29) de chaque marqueur (25) de la pluralité de marqueurs (25) est conçu comme au moins une propriété de matériau à sa position de bande (17) sous forme codée ou non codée.

7. Procédé selon la revendication 6, comprenant les étapes suivantes :
- compilation d'un ensemble de paramètres de production (31) de la bande d'acier (11), et/ou
- en créant un identifiant unique de la bande d'acier (33),
chaque marqueur (25) de la pluralité de marqueurs (25) contenant l'ensemble des paramètres de production et/ou l'identifiant de la bande d'acier (33) sous forme codée ou non codée.

8. Ensemble de bandes d'acier comprenant une bande d'acier (11) et un conteneur de données associé à la bande d'acier (11), le conteneur de données (43) comprenant une pluralité d'ensembles de données avec des identificateurs d'ensembles de données uniques (47), chaque ensemble de données contenant les propriétés matérielles de la bande d'acier (11) à une position discrète de la bande (17) et éventuellement la position discrète de la bande (17), et la bande d'acier (11) comporte plusieurs marqueurs (25) sur le bord de la bande à des positions discrètes de la bande, chaque marqueur (25) de la pluralité de marqueurs (25) comportant un identificateur de matériau unique (29), qui est attribué à un identificateur d'ensemble de données unique (47) de sorte qu'il en résulte une attribution unique de chaque marqueur (25) à un ensemble de données (45), chaque marqueur (25) étant attribué à l'ensemble de données (45) qui contient les propriétés des matériaux de sa position de bande (17).

9. Ensemble de bandes d'acier selon la revendication 8, **caractérisé par le fait que** le conteneur de données (43) comprend un ensemble de paramètres de production de la bande d'acier (11) et/ou le conteneur de données (43) comprend un identificateur unique de la bande d'acier (33).

10. Bande d'acier (11) avec une pluralité de marqueurs (25) à des positions discrètes de la bande, chaque marqueur (25) de la pluralité de marqueurs (25) contenant au moins une propriété de matériau à sa position de bande respective (17) sous forme codée ou non codée, **caractérisée en ce que** plusieurs marqueurs (25) au bord de la bande sont aux positions discrètes de la bande.

11. Bande d'acier (11) selon la revendication 10, dans laquelle chaque marqueur (25) de la pluralité de marqueurs (25) contient un ensemble de paramètres de production et/ou un identificateur unique de bande d'acier (33) sous forme codée ou non codée.

12. Procédé de traitement d'un ensemble de bandes d'acier selon l'une des revendications 8 à 9, comprenant les étapes suivantes :
- lecture d'au moins un marqueur (25) de la pluralité de marqueurs (25) sur la bande d'acier, le marqueur (25) ayant un identificateur de matériau (29),
- lecture de l'ensemble de données attribué à l'identificateur de matériau lu (29) et contenant les propriétés du matériau à la position de la bande (17) du marqueur lu dans le conteneur de données,
- commander une unité de traitement (41) sur la base des propriétés matérielles lues.

13. Procédé selon la revendication 12, comprenant les étapes suivantes :
- lecture d'un ensemble de paramètres de production de la bande d'acier (11) et/ou de l'identifiant unique de la bande d'acier (33) à partir du conteneur de données,
- commander une unité de traitement (41) sur la base des paramètres de production lus et/ou de l'identifiant de la bande d'acier lu.

14. Procédé de traitement d'une bande d'acier (11) selon l'une quelconque des revendications 10 à 11, comprenant les étapes suivantes :
- lecture d'au moins une propriété du matériau à partir d'un marqueur (25) de la pluralité de marqueurs,
- commander une unité de traitement (41) sur la base des propriétés matérielles lues.

15. Procédé selon la revendication 14, comprenant les étapes suivantes :
- lecture d'un ensemble de paramètres de production de la bande d'acier (11) et/ou de l'identifiant unique de la bande d'acier (33) à partir d'un marqueur (25) de la pluralité de marqueurs,
- commander une unité de traitement (41) sur la base des paramètres de production lus et/ou de l'identifiant de la bande d'acier lu (33).
